Europäisches Patentamt

(19) European Patent Office

Office européen des brevets

(11) Publication number: **0 051 615**
**B1**

# (12) EUROPEAN PATENT SPECIFICATION

(45) Date of publication of patent specification: 07.08.85

(21) Application number: 81901140.4

(22) Date of filing: 13.05.81

(86) International application number:
**PCT/GB81/00086**

(87) International publication number:
**WO 81/03265 26.11.81 Gazette 81/28**

(51) Int. Cl.⁴: **A 41 D 13/00,** B 01 D 39/16,
D 04 H 13/00

(54) **DISPOSABLE APPAREL AND METHOD OF PRODUCING IT.**

(30) Priority: 14.05.80 GB 8015933

(43) Date of publication of application:
19.05.82 Bulletin 82/20

(45) Publication of the grant of the patent:
07.08.85 Bulletin 85/32

(84) Designated Contracting States:
AT DE FR GB

(56) References cited:
FR-A-2 416 535
GB-A-2 014 059

(73) Proprietor: SURGIKOS INC.
501 George Street
New Brunswick New Jersey 08903 (US)

(72) Inventor: COATES, David Anthony
5, Park Avenue Skipton
North Yorkshire BD23 1PN (GB)
Inventor: SMITH, Rory James Maxwell
"High Dene" Hebden Nr. Grassington
North Yorkshire (GB)

(74) Representative: Jones, Alan John et al
CARPMAELS & RANSFORD 43 Bloomsbury
Square
London, WC1A 2RA (GB)

Courier Press, Leamington Spa, England.

## Description

This invention relates to disposable apparel (other than a face mask), especially disposable surgical apparel, and to a method of producing it.

Surgical apparel has been employed in surgery for some time to prevent pathological micro-organisms, such as bacteria, emanating from the wearer from contaminating the patient undergoing surgery, and also to protect the wearer from bacteria emanating from the patient. For example, bacteria may be exhaled by the wearer and/or by the patient. Further, the human body is constantly shedding flakes of dead skin; such flakes are often contaminated by bacteria.

Amongst the surgical apparel employed in surgery are surgical gowns, head-wear and scrub clothing such as scrub-suits, worn by the surgeon or operating-theatre staff, and surgical drapes placed on the patient. In the past, reusable surgical apparel has been employed which requires laundering and sterilisation after each use, but more recently disposable, i.e. single-use, surgical apparel has come into use. Such surgical apparel relies on mechanical action, namely an arrangement of filaments or fibers of particular diameter defining areas of relatively small size, to trap bacteria and particles contaminated by bacteria.

The present invention provides an item of disposable apparel other than a face mask, especially disposable surgical apparel, comprising, as a protective barrier layer, a web comprising fibrillated electret fibers having an average diameter or width of at least 10 micrometres, there being up to 75 g of the electret fibers per square meter of said web. Preferably there are not more than 50 g/m$^2$ of the electret fibers.

Preferably the fibrillated electret fibers are of polypropylene, but other plastics fibers, e.g. polytetrafluoroethylene fibers, which can be electrically charged and retain such charge, can be used. The fibrillated fibers may be electrically charged before or after fibrillation. The fibrillated fibers are substantially rectangular in section and may, for example, have a depth of about 10 micrometres and an average width of about 40 micrometres, individual fibers having a width varying from at least 10 micrometres to about 100 micrometres (1 micrometre=1×10$^{-6}$m).

Electret fibers trap bacteria and particles by means of electrostatic attraction and constitute a highly efficient filter medium. They are described, for example, in the Paper entitled "non-woven electret fibre: a new filtering medium of high efficiency" by J. van Turnhout et al appearing in Inst. Phys. Conf. Ser. No. 48 at Page 337, published by the Institute of Physics. Although this Paper suggests the industrial use of fibrillated electret filters, e.g. in industrial face masks, there has not been, to our knowledge, any suggestion of their use in items of disposable apparel other than face masks. Indeed, by virtue of their weight, in excess of about 150 g/m$^2$, which, along with needle punching, is necessary to maintain their integrity, the commercially available electret filters are far too bulky, heavy and unconformable to be used in items of disposable apparel other than face masks.

In GB—A—2 015 253 (3M Company) there is disclosed a melt-blown fibrous electret, which can comprise fibers of microscopic diameters (25 micrometers down to 1 micrometer) formed as unconnected fibers. The only use of the melt-blown fibrous electret in the 3M application is as a face mask. There is no indication that the melt-blown fibrous electret could be used in any item of apparel other than a face mask. Moreover, the 3M application points away from the use of fibrillated electret fibers in any application.

Our co-pending European patent application (No. 81901141.2) filed on the same day as the present application and published as EP—A—0 051 616 discloses a surgical face mask comprising a web of fibrillated electret fibers, the weight of the fibrillated fiber in the web being up to 50 g/m$^2$ and the fibrillated fibers having an average width of at least 10 micrometers.

In one embodiment of the present invention the fibrillated electret fibers may be present in the web along with other textile fibers. Suitable textile fibers include natural and/or man-made fibers e.g. cellulosic fibers such as viscose rayon fibers or cotton fibers. Synthetic fibers such as nylon, polyester or polypropylene fibers may be used. Preferably said textile fibers are heat-sealable to facilitate make-up of the disposable surgical apparel, e.g. sheath-core fibers having a polypropylene core and a polyethylene sheath. Such fibers can also be electrically charged to produce electret fibers.

In an alternative embodiment, the web may be constituted wholly of fibrillated electret fibers. Whether the web consists of or includes fibrillated electret fibers, it may be supported by one or more fabric webs. For example, it may be laminated to one or more plies of a nonwoven fabric comprising textile fibers as mentioned above, or may be supported by and retained between webs of nonwoven fabric. For example, a web consisting of fibrillated electret fibers and having a weight up to 75 g/m$^2$, preferably not more than 50 g/m$^2$, is laminated between two plies of nonwoven fabric each having a weight of not more than 75 g/m$^2$, preferably not more than 50 g/m$^2$.

The web of fibrillated electret fibers or fibrillated electret precursor fibers may be stabilised by printing with a binder and/or by rearrangement, entanglement, or "bundling" with fluid streams, e.g. in accordance with the process described in GB—A—816673, GB—A—836396 and GB—A—836397. In the "bundling" process, it is preferred to use high pressure, e.g. about 110,326 kPa (16,000 lb/in$^2$), low-diameter fluid streams so that the apertures produced in the web are of 25 micrometres diameter or less, i.e. within the size range of the gaps between the individual fibrillated electret fibers.

Preferably the web constituting the protective barrier layer is air-laid, although it may be dry-laid, as by carding, if desired.

The present invention further provides a method of producing disposable apparel other than a face mask, especially disposable surgical apparel, including the steps of laying one or more webs comprising fibrillated electret fibers or fibrillated electret-precursor fibers, said fibers having, in the web or combined webs, a weight up to 75 g/m$^2$ and the fibers having an average diameter or width of at least 10 micrometres, and processing the web into an item of said disposable apparel. When electret-precursor fibers are used, they are electrically charged after formation of the web.

Preferably said web is laminated to at least one web of fabric, preferably nonwoven fabric, and the laminated webs are processed into the disposable apparel.

In one embodiment of the method of the present invention, a commercially available needle-punched web of fibrillated electret fibers may be used as a starting material. A web of fibrillated electret fibers produced in the manner described in GB—A—1469740 may be cut into lengths, air-laid, and needle-punched to provide the web of starting material. Such a web has a weight considerably in excess of 75 g/m$^2$, e.g. 150 g/m$^2$ or more. A web having a weight up to 75 g/m$^2$, preferably no more than 50 g/m$^2$ may be reconstituted from the heavier-weight precursor web using the method and/or apparatus described in GB—A—1375584 and GB—A—1375585.

The web of desired weight may be laid onto a web of fabric, preferably nonwoven fabric, forming a support. Another support layer of fabric, preferably nonwoven fabric, may be laid onto the fibrillated electret fiber web, and the laminate formed is processed into disposable apparel.

Instead of winding the fibrillated fibers directly onto a roller as in the aforementioned GB—A—1469740, the fibrillated fibers leaving the fibrillator may, in another embodiment of the method of the present invention, be chopped into about 5 cm lengths, and carded into a web in which the fibers extend longitudinally thereof. The carded web is doffed without coming into contact with metal, and may be laid onto a web of fabric, preferably nonwoven fabric, forming a support layer. If desired, one or more carded webs may be deposited from other carding engines onto the first carded web to produce a web of fibrillated electret fibers of desired thickness and weight. For example, four carding engines may be employed each to produce a web weighing about 6 g/m$^2$ which, superimposed, produce an overall web weighing about 25 g/m$^2$. Another support layer of nonwoven fabric may be laid onto the carded web and the laminate formed is processed into an item of disposable apparel.

In yet another embodiment of the method of the present invention the web of fibrillated film is not chopped and carded, but is spread out immediately after leaving the fibrillator with the fibers extending substantially longitudinally of the web. The web is laid onto a web of nonwoven fabric forming a support layer for a laminate. Two or more such fibrillated webs may be superimposed to form an electret filter web of desired thickness and weight. Another support layer of nonwoven fabric is laid onto the fibrillated fiber web, and the laminate formed is processed into an item of disposable surgical apparel. In this embodiment, the fibrillated electret fibers are continuous.

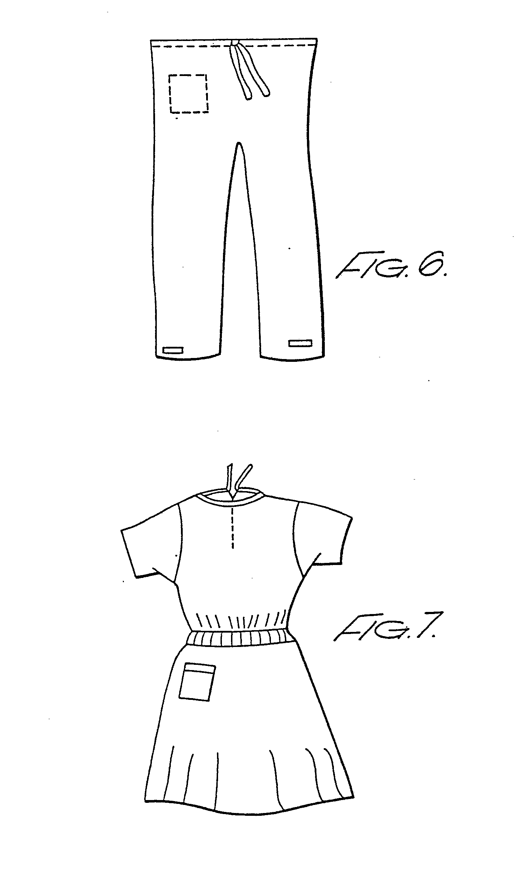

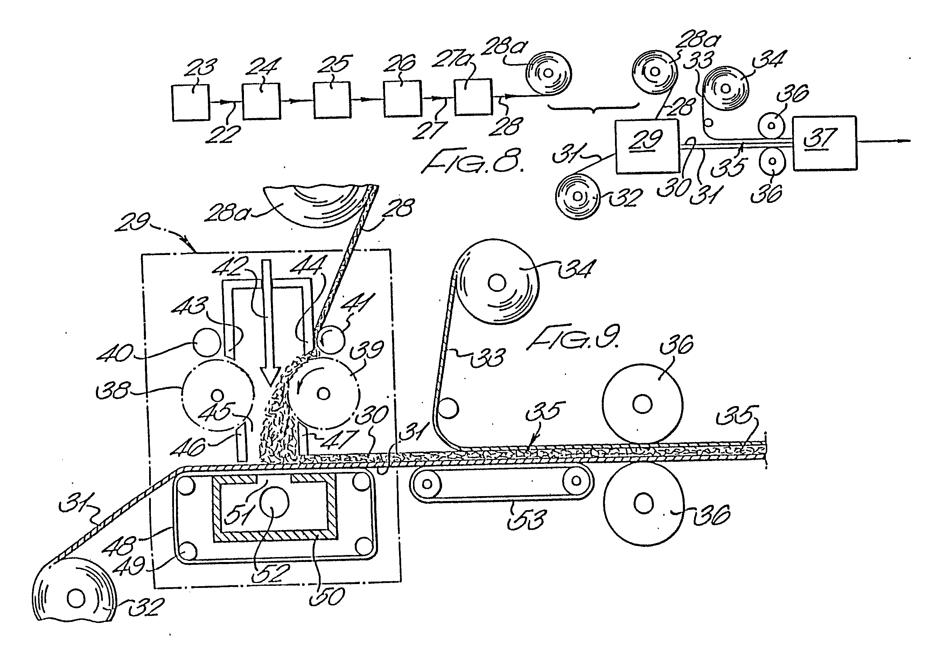

The binder, when used, may be applied to the unbonded web of fibrillated fibers by, for example, a rotogravure print roller. Reference is also made to Figure 5 of GB—A—742089 for suitable apparatus for carrying out the bonding step. The binder is preferably distributed uniformly throughout the web, i.e. continuously or in regularly spaced areas. A suitable binder is, for example, an acrylic binder as is well known in the art.

Disposable surgical apparel other than face masks in accordance with the present invention may be made up partly or entirely from the web comprising fibrillated electret fibers. For example, the disposable surgical apparel may be made up entirely from a web comprising fibrillated electret fibers or may include one or more webs of other nonwoven fabric not containing electret fibers.

Some preferred embodiments in accordance with the present invention will now be described, by way of example, with reference to the accompanying diagrammatic Drawings in which:—

Figure 1 is a plan view of a disposable surgical drape;

Figure 2 is an elevation of a disposable back-opening surgical gown;

Figure 3 is a plan view of a disposable operating-theatre cap;

Figure 4 is an elevation of the cap of Figure 3;

Figure 5 is an elevation of a disposable tunic top;

Figure 6 is an elevation of disposable scrub trousers;

Figure 7 is an elevation of a disposable nurse's dress;

Figure 8 is a flow diagram of one method of producing the apparel; and

Figure 9 is a side elevation of apparatus for producing a three-ply laminar web used in the method of Figure 8.

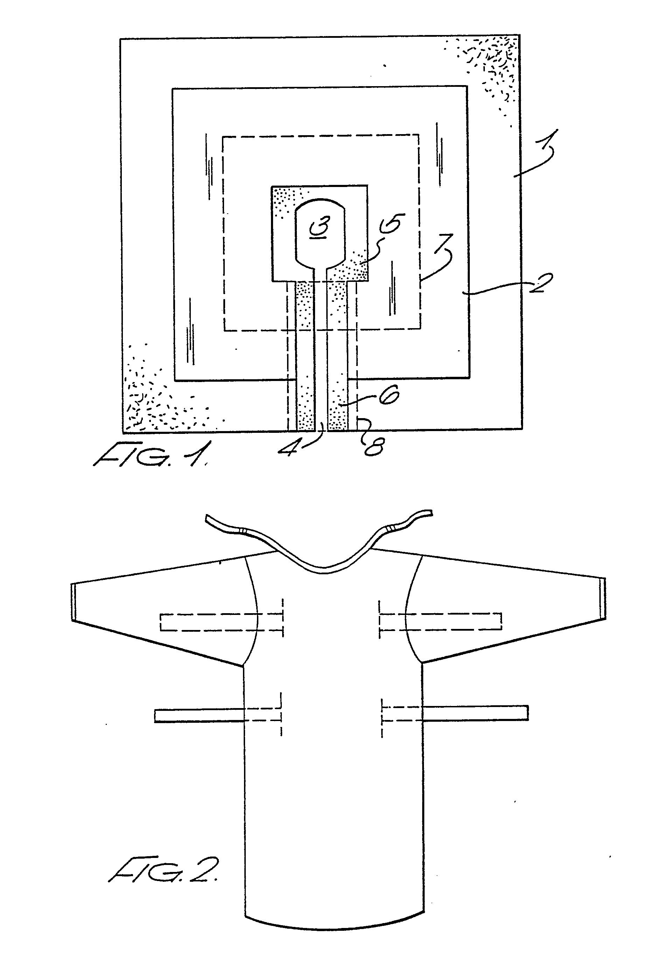

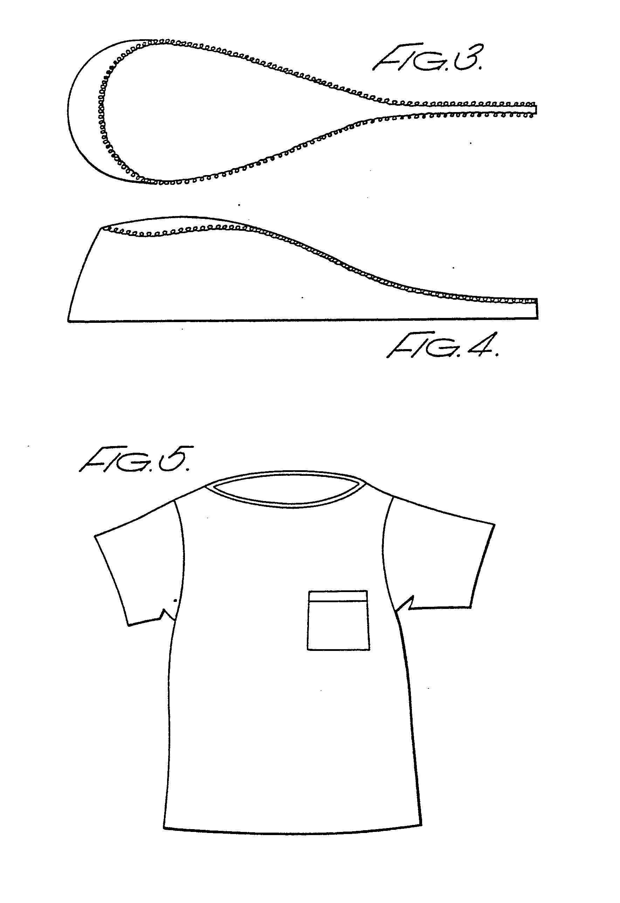

Referring to Figures 1 to 7 of the Drawings, the items of disposable surgical apparel shown therein are made up of individual pieces or panels cut from a web comprising fibrillated electret fibers, there being up to 75 g/m$^2$, preferably not more than 50 g/m$^2$, of the electret fibers in the web.

Such a web acts as a protective barrier layer to pathological micro-organisms such as bacteria between the patient and/or operating theatre staff wearing the apparel and the environment.

The pieces or panels may be joined together by stitching, but when the web contains heat- sealable fibers, the pieces may be heat-welded together. Other methods such as adhesive-bonding may also be used.

Preferably the fibrillated fibers are polypropylene fibers. These fibers are substantially rectangular in section and have an average width of at least 10 micrometres. Preferably they have a depth or more than 10 micrometres and an average width of about 40 micrometres, individual fibers having a width varying from at least 10 micrometres to about 100 micrometres.

The web may include or consist of the fibrillated electret fibers. In the former case, the web may be an air-laid or carded web of fibrillated electret fibers and textile fibers, said electret fibers constituting from 5 to 50% by weight of the web which weighs no more than 150 g/m². Suitable textile fibers are mentioned hereinabove. Such a web may be stabilised by adhesive bonding and/or by rearrangement, entangling or "bundling" with fluid streams. Such rearrangement, entangling or "bundling" is operated under conditions to produce apertures in the nonwoven fabric of 25 micrometres diameter or less, e.g. including high-pressure, e.g. about 110,316 kPa (16,000 lbs/in²), low-diameter fluid streams.

The web may consist of fibrillated electret fibers, the weight thereof being up to 75 g/m², preferably no more than 50 g/m². In this case ths web of fibrillated electret fibers is unbonded and stabilised by laminating it between two plies of nonwoven fabric each weighing no more than 75 g/m², preferably no more than 50 g/m². The plies may each be a carded nonwoven fabric bonded with a binder such as an acrylic binder, and may also be rearranged, entangled or "bundled".

The disposable surgical drape shown in Figure 1 comprises a square web 1 comprising fibrillated electret fibers. To the upper side of this web 1 is secured a smaller square panel 2 of thin, liquid-impermeable material e.g. a plastics film or plastics-coated nonwoven fabric. Both 1 and 2 are fenestrated at 3 as shown, a slot 4 extending from the fenestration 3 to a side edge of the web 1.

Coated on the marginal portions 5, 6 of the material surrounding fenestration 3 and slot 4 respectively is an adhesive for securing the drape to the patient's body. Prior to use, such adhesive areas are covered with silicone-coated release paper liners 7 and 8 shown in dotted outline.

The body of each item of disposable surgical apparel shown in Figures 2 to 7 is made up from pieces of a web comprising fibrillated electret fibers.

Disposable apparel other than face masks in accordance with the present invention may also be worn as protective clothing in ultra-clean areas, e.g. in the electronics and pharmaceutical industries.

One method of producing a laminar web from which the disposable surgical apparel of Figures 1 to 7 may be produced will now be described with reference to Figure 8.

A web 22 of plastics film, preferably polypropylene film, but alternatively of tetrafluoroethylene or other suitable plastics material, is extruded from extruder 23, advanced to stretching apparatus 24 in which the film is stretched uniaxially in the machine direction, advanced to corona charger 25 where the web is charged on both surfaces, and advanced to fibrillator 26 which splits the web into a web 27 of unbonded fibrillated interconnected electret fibers. The fibrillator 26 is operated in such a way that the fibrillated fibers have an average width of at least 10 micrometres, and extend substantially longitudinally of the web.

For further details of this sequence of steps and the apparatus employed, reference is made to GB—A—1 469 740, the contents of which are incorporated herein by reference.

Fibrillated film web 27 is then processed, as by cutting into lengths and air-laying followed by needle-punching in unit 27a, into a randomly-oriented bonded fibrous web 28 having a weight in the range of about 150 g/m² to about 250 g/m², which is wound up into a roll 28a.

The web 28 is far too bulky, heavy, and unconformable to be used as a protective barrier layer in disposable surgical apparel. Accordingly it is fed from roll 28a to a dual-rotor machine 29 described hereinafter with reference to Figure 9. In the dual-rotor machine 29, web 28 is reconstituted by air-laying into a web 30 of unbonded fibrillated interconnected electret fibers, the web 30 having a weight up to 75 g/m², preferably no more than 50 g/m². A web of such a weight, hereinafter referred to as a barrier web, is conformable, pliable, and comfortable to wear because of its low weight and very low air resistance.

The barrier web 30 is laid, in dual rotor machine 29, onto a support or carrier web 31 of nonwoven fabric e.g. "Masslinn" nonwoven fabric weighing about 13 to 35 g/m², e.g. 18 to 24 g/m², advanced from a roll 32 thereof. Immediately after leaving machine 29, a similar web 33 of a nonwoven fabric advanced from roll 34 thereof is laid upon the two-ply web comprising barrier web 30 supported by web 31 to produce a three-ply laminar web 35.

The web 35 may then be passed between calendering rolls 36 heated to a temperature of about 95°C to assist in compacting and bonding the web 35. Other compressing and heating means may be employed if desired.

The laminar web 35, after leaving calendering rolls 36, is then processed into disposable surgical apparel in unit 37. The web 35 may be processed into the apparel by cutting the web transversely into individual pieces or panels, and joining the pieces or panels together as above described.

The dual rotor machine 29 is shown in more detail in Figure 9, and is constructed and arranged to operate as described with reference to Figures 13 to 19 of GB—A—1 374 584, the contents of which are incorporated herein by reference. The machine comprises two saw-tooth wire wound lickerins 38 and 39, associated feed rollers 40 and 41, adjustable baffle 42, nose bars 43 and 44, and casting chamber 45 defined between doctor blades 46 and 47. An endless mesh screen conveyor 48 directed over pulleys 49 and driven by drive means (not shown) in a clockwise direction slides over a housing 50 containing an aperture 51 through which air is sucked into a conduit 52 leading to a suction fan (not shown).

In the method described above with reference to Figure 8, only the right-hand side of the machine is operated, i.e. only lickerin 39 is rotated, at high speed. The web 28 is fed in over feed roller 41 onto lickerin 39 which breaks up the web 28 to release the fibrillated fibers. After passing nose bar 44 the fibers enter casting chamber 45 through which high velocity air is drawn by the suction fan. The air stream strips from lickerin 39 fibers which are carried by the air stream past doctor blade 47 and deposited on web 31, advanced from roll 32 and itself supported on screen conveyor 48, to form barrier web 30. From screen conveyor 48, webs 30 and 31 are doffed onto a takeaway endless belt conveyor 53 driven in a clockwise direction. Web 33, advanced from roll 34, is laid upon the two-ply web immediately after it leaves machine 29 to provide three-ply web 35. Web 35 may be forwarded to calendering rolls 36 by conveyor 53.

The weight per unit area of the web 35 can be varied by varying the speed of the feed roller 41 of the dual rotor machine 29 in relation to the speed of the conveyor 48.

Alternatively, both sides of the dual rotor machine may be operated to produce, for example, a two-ply web.

Example

Disposable surgical apparel was produced using the apparatus described above, and webs of the following nonwoven fabrics. As web 28, a 150 g/m² web of needle-punched fibrillated propropylene electret fibers obtained commercially from N.V. Verto, Netherlands, was employed. As webs 31 and 33 20 g/m² webs of commercially available Chisso bonded rayon nonwoven fabric were employed.

Dual rotor machine 29 was operated to produce from web 28 a random barrier web 30 of 25 g/m² under the following conditions.

| | |
|---|---|
| Air-flow: | 198 m³/min (7000 ft³/min) |
| Diameter of feed-roller: | 8.9 cm (3.5 inch) |
| Diameter of Lickerin: | 22.9 cm (9.0 inch) |
| Gap between feed-roller and nose-bar: | 0.013 cm (0.005 inch) |
| Gap between lickerin and nose-bar: | 0.038 cm (0.015 inch) |
| Gap between lickerin and doctor-blade: | 0.03 to 0.038 cm (0.012 to 0.015 inch) |
| Suction fan: | 5.08 cm (2 inch) mercury |
| Speed of carrier web 31 in relation to feed roller: | ×5 |
| Temperature of calendering rolls: | 95°C |

The three-ply laminar web produced was processed into disposable surgical apparel as described above with reference to Figures 1 to 7.

The air resistance of the laminar web was determined by passing air at a flow rate of 85 litres per minute through 115 cm² (17.8 inch²) of the web. The pressure drop, in mm of water, between the upstream and downstream sides of the test web in a measure of the air resistance of the web. The air resistance of the web was found to be negligible, i.e. a back pressure of less than 1 mm of water.

The bacterial filtration efficiency (BFI) of the web was determined to be extremely high.

**Claims**

1. An item of disposable apparel other than a face mask comprising, as a protective barrier layer, a web comprising fibrillated electret fibers having an average width or diameter of at least 10 micrometres, there being up to 75 g of the electret fibers per square meter of said web.

2. An item of disposable apparel according to claim 1 wherein there are not more than 50 g/m² of the electret fibers.

3. An item of disposable apparel according to claim 1 or claim 2 wherein said web consists of said fibrillated electret fibers.

4. An item of disposable apparel according to claim 1 or claim 2 wherein said electret fibers constitute from 5 to 50% by weight of the web, and the web weighs no more than 150 g/m².

5. An item of disposable apparel according to any one of claims 1 to 5 wherein said apparel further comprises support means for the protective barrier layer.

6. An item of disposable apparel according to claim 5 wherein said support means comprises at least one web of nonwoven fabric supporting said protective barrier layer.

7. An item of disposable apparel according to any one of claims 1 to 6 wherein said fibrillated electret fibers are polypropylene electret fibers.

8. A method of producing an item of disposable apparel other than a face mask, including the step of providing a protective barrier layer by laying one or more webs comprising fibrillated electret fibers or fibrillated electret-precursor fibers, said fibers having, in said web or combined webs, a total weight up to 75 g/m$^2$ and the fibers having an average width or diameter of at least 10 micrometres.

9. A method of producing an item of disposable apparel according to claim 8, wherein said fibrillated electret fibers or electret-precursor fiber web or webs is/are laid on a first web of nonwoven fabric, optionally a second web of nonwoven fabric is laid on said one or more webs of electret or electret-precursor fibers, and the formed laminar web is processed into said item of disposable apparel.

**Patentansprüche**

1. Ein Wegwerfkleidungsstück, das keine Gesichtsmaske ist und welches als eine schützende Sperrschicht eine Bahn umfaßt, welche Bahn fibrillierte Electret-Fasern mit einer durchschnittlichen Weite oder einem durchschnittlichen Durchmesser von wenigstens 10 µm enthält, wobei bis zu 75 g an Electret-Fasern je m$^2$ der genannten Bahn vorhanden sind.

2. Ein Wegwerfkleidungsstück nach Anspruch 1, worin nicht mehr als 50 g/m$^2$ an Electret-Fasern vorhanden sind.

3. Ein Wegwerfkleidungsstück nach Anspruch 1 oder Anspruch 2, worin die genannte Bahn aus den genannten fibrillierten Electret-Fasern besteht.

4. Ein Wegwerfkleidungsstück nach Anspruch 1 oder Anspruch 2, worin die genannten Electret-Fasern 5 bis 50 Gew.-% der Bahn ausmachen und worin die Bahn nicht mehr als 150 g/m$^2$ wiegt.

5. Ein Wegwerfkleidungsstück nach einem der Ansprüche 1 bis 4, worin das genannte Kleidungsstück weiterhin Stützeinrichtungen für die schützende Sperrschicht umfaßt.

6. Ein Wegwerfkleidungsstück nach Anspruch 5, worin die genannten Stützeinrichtungen wenigstens eine Bahn aus einem Faservliesstoff umfassen, welche Bahn die genannte schützende Sperrschicht trägt.

7. Ein Wegwerfkleidungsstück nach einem der Ansprüche 1 bis 6, worin die genannten fibrillierten Electret-Fasern Polypropylen-Electret-Fasern sind.

8. Ein Verfahren zur Herstellung eines Wegwerfkleidungsstückes, das keine Gesichtsmaske ist, umfassend die Stufe der Schaffung einer schützenden Sperrschicht durch Auflegen von einer oder mehreren Bahnen, welche fibrillierte Electret-Fasern oder Vorläufer von fibrillierten Electret-Fasern enthalten, wobei die genannten Fasern in der genannten Bahn oder in den kombinierten Bahnen ein Gesamtgewicht von bis zu 75 g/m$^2$ aufweisen und wobei die Fasern eine durchschnittliche Weite oder einen durchschnittlichen Durchmesser von wenigstens 10 µm haben.

9. Ein Verfahren zur Herstellung eines Wegwerfkleidungsstückes nach Anspruch 8, bei welchem die genannte Bahn oder die genannten Bahnen mit einem Gehalt an fibrillierten Electret-Fasern oder Vorläufern von fibrillierten Electret-Fasern auf eine erste Bahn aus einem Faservliesstoff aufgelegt wird bzw. werden und bei welchem gegebenenfalls eine zweite Bahn aus einem Faservliesstoff auf die genannte Bahn bzw. auf die genannten mehreren Bahnen mit einem Gehalt an Electret-Fasern oder an Vorläufer-Electret-Fasern aufgelegt wird und die so gebildete, mehrschichtige Bahn zu dem genannten Wegwerfkleidungsstück verarbeitet wird.

**Revendications**

1. Une pièce de vêtement jetable autre qu'un masque facial comprenant, comme couche formant écran protecteur, une feuille comprenant des fibres à électrets fibrillées ayant une largeur ou diamètre moyen d'au moins 10 microns, jusqu'à 75 g de fibres à électrets étant prévus par mètre carré de ladite feuille.

2. Une pièce de vêtement jetable selon la revendication 1, dans laquelle il n'est pas prévu plus de 50 g/m$^2$ de fibres à électrets.

3. Une pièce de vêtement jetable selon l'une des revendications 1 et 2, dans laquelle ladite feuille se compose desdites fibres à électrets fibrillées.

4. Une pièce de vêtement jetable selon l'une des revendications 1 et 2, dans laquelle lesdites fibres à électrets constituent de 5 à 50% en poids de la feuille et où la feuille ne pèse pas plus de 150 g/m$^2$.

5. Une pièce de vêtement jetable selon l'une quelconque des revendications 1 à 4, dans laquelle ladite pièce comprend en outre un moyen pour supporter ladite couche formant écran protecteur.

6. Une pièce de vêtement jetable selon la revendication 5, dans laquelle ledit moyen de support comprend au moins une feuille de tissu non tissé supportant lesdites couches formant écran protecteur.

7. Une pièce de vêtement jetable selon l'une quelconque des revendications 1 à 6, dans laquelle lesdites fibres à électrets fibrillées sont des fibres à électrets en polypropylène.

8. Un procédé de fabrication d'une pièce de vêtement jetable autre qu'un masque facial, comprenant l'étape de création d'une couche formant écran protecteur en déposant une ou plusieurs feuilles contenant des fibres à électrets fibrillées ou bien des fibres à précurseur d'électrets fibrillées, lesdites fibres ayant, dans ladite feuille ou lesdites feuilles combinées, un poids total pouvant atteindre 75 g/m² et les fibres ayant une largeur ou diamètre moyen d'au moins 10 microns.

9. Un procédé de fabrication d'une pièce de vêtement jetable selon la revendication 8, dans lequel la ou les feuilles en fibres à électrets fibrillées ou en fibres à précurseur d'électrets sont placées sur une première feuille de tissu non tissé, et éventuellement une seconde feuille de tissu non tissé est déposée sur la ou lesdites feuilles en fibres à électrets ou à précurseur d'électrets et la feuille stratifiée ainsi formée est mise en oeuvre pour former ladite pièce de vêtement jetable.

FIG. 1

FIG. 2.

FIG.3.

FIG.4.

FIG.5.

0 051 615

FIG. 6.

FIG. 7.

3

FIG.8.

FIG.9.

0 051 615